# EUROPEAN PATENT SPECIFICATION

(11) **EP 3 547 636 B1**
(45) Date of publication and mention of the grant of the patent: **02.03.2022**
(21) Application number: 17886380.9
(22) Date of filing: 26.07.2017
(51) Int. Cl.: H04L 29/06, H04Q 11/00, H04L 12/743, H04L 12/773

(54) **DATA EXCHANGE SYSTEM AND METHOD, AND COMPUTER STORAGE MEDIUM**
DATENAUSTAUSCHSYSTEM UND VERFAHREN SOWIE COMPUTERSPEICHERMEDIUM
SYSTÈME ET PROCÉDÉ D'ÉCHANGE DE DONNÉES, ET SUPPORT DE STOCKAGE INFORMATIQUE

(30) Priority: 30.12.2016 CN 201611263400
(43) Date of publication of application: 02.10.2019
(73) Proprietor: Sanechips Technology Co., Ltd., Shenzhen, Guangdong 518055 (CN)
(72) Inventor: LIU, Hongchun, Shenzhen, Guangdong 518055 (CN)
(74) Representative: D'Halleweyn, Nele Veerle Trees Gertrudis
(86) International application number: PCT/CN2017/094536
(87) International publication number: WO 2018/120816

(56) References cited:
- CN-A- 101 110 779
- CN-A- 102 624 738
- US-A1- 2010 098 419
- US-A1- 2012 263 462
- US-A1- 2012 263 462

## Description

### Cross-Reference to Related Application

The present application is based on Chinese patent application No. 201611263400.7, filed on December 30, 2016, and claims the priority of the Chinese patent application.

### Technical Field

The present invention relates to the communication technology, in particular to a data exchange system and method, and a computer storage medium.

### Background

A Passive Optical Network (PON) system is composed of an Optical Line Terminal (OLT), an Optical Network Unit (ONU), and an Optical Distribution Network (ODN) device connected between the OLT and the ONU. The ONU as an optical communication device arranged at a user side may provide a user with multiple services, such as a voice service, a video service, and a wireless service.

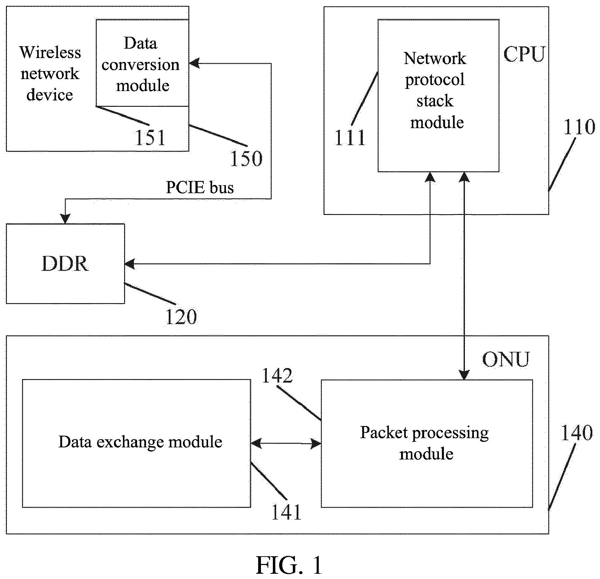

Traditional wireless data is processed through CPU software acceleration. In a wireless data processing flow shown in FIG. 1, ONU 140 includes a data exchange module 141 and a packet processing module 142 that are communicatively connected. The ONU 140 receives photoelectrically converted data from optical signals and sent by a central office device, and then the ONU 140 converts the data into Ethernet data. A network protocol stack module 111 in a CPU 110 reads the Ethernet data from the packet processing module 142 of the ONU 140 and writes the Ethernet data into a DDR 120. After that, a wireless network device 150 reads Ethernet signals from the DDR 120, and a data conversion module 151 in the wireless network device 150 converts the Ethernet data into wireless data. Herein, the data in the ONU 140 and the DDR 120 are processed by the CPU 110, which puts forward a higher requirement on a processing capability of the CPU, and in addition, also increases a CPU occupancy rate, adversely affects a processing speed of the CPU, and further adversely affects wireless network performance provided by the wireless network device.

With an increasing quantity of services supported by an ONU, a quantity of services that the CPU needs to support in the wireless data processing flow also increases correspondingly. An increase in the CPU occupancy rate weakens support of the ONU for services other than wireless services and adversely affects competitiveness of the ONU.

US 2010098419 A1 discloses a gigabit passive optical network (GPON) residential gateway including a microprocessor, dual packet processors, a plurality of Ethernet media access control (MAC) adapters, a GPON MAC adapter, a direct memory access (DMA) engine, a digital signal processor (DSP), and a memory controller that interacts with an external memory.

### Summary

In view of that, examples of the present invention provide a data exchange system and method, and a computer storage medium, which can reduce a Central Processing Unit (CPU) occupancy rate of a wireless service and enhance competitiveness of an Optical Network Unit (ONU).

To achieve the purpose, a data exchange system in accordance with claim 1 is provided, data exchange method in accordance with claim 7 is provided, and a computer storage medium in accordance with claim 11 is provided. Advantageous embodiments of the present invention are described in the dependent claims.

According to the data exchange solution provided by the present invention, after the CPU configures the data destination port, data exchange between the DDR and the ONU is implemented through the acceleration module, Ethernet data is processed through a hardware module, the CPU occupancy rate of wireless services in the data exchange system is reduced, support of the ONU for other services other than wireless services is improved, and competitiveness of the ONU is enhanced.

### Brief Description of Drawings

FIG. 1 is a schematic diagram of a wireless data processing flow in the existing art.
FIG. 2 is a schematic diagram of a wireless data processing flow in a data exchange system in an example of the present invention.
FIG. 3 is a schematic diagram of a wireless data processing flow in another data exchange system in an example of the present invention.
FIG. 4 is a flow chart of an implementation of a data exchange method in an example of the present invention.
FIG. 5 is a flow chart of an implementation of another data exchange method in an example of the present invention.

### Detailed Description

To understand features and technical contents of the present invention in more detail, implementations of the present invention will be described in detail below with reference to accompanying drawings, which are for reference only and are not intended to limit the present invention.

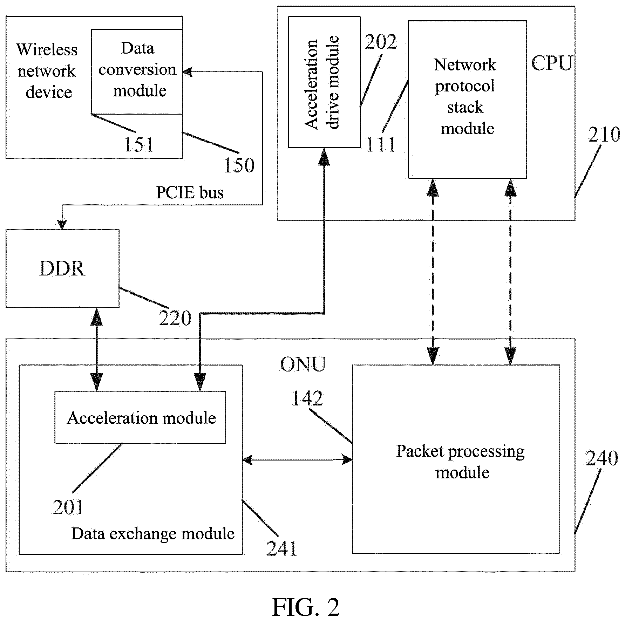

FIG. 2 is a schematic diagram of a wireless data processing flow in a data exchange system in an example of the present invention. As shown in FIG. 2, the data exchange system provided by the example of the present invention is used for data exchange between an ONU and a wireless network device. The data exchange system includes a CPU 210, a Double Data Rate Synchronous Dynamic Random Access Memory (DDR) 220, an ONU 240 including an acceleration module 201, and a wireless network device 150.

In a process of data transmission from the wireless network device 150 to the ONU 240: the wireless network device 150 receives first wireless data, converts the first wireless data into first Ethernet data, generates a first descriptor, and then writes the first Ethernet data and the first descriptor into the DDR 220; the acceleration module 201 reads the first Ethernet data and the first descriptor in the DDR 220 to send to the ONU; establishes a MAC address table according to the received first Ethernet data and the first descriptor sent by the ONU 240; modifies the first descriptor by querying the MAC address table, and sends the first Ethernet data and the first descriptor to the ONU 240; the CPU 210 configures a data destination port to the first descriptor when the data destination port in the first Ethernet data and the first descriptor, which are received by the ONU 240, is unknown; the ONU 240 receives the first Ethernet data and the first descriptor sent by the acceleration module 201, and after processing the first Ethernet data, the ONU 240 sends the first Ethernet data to the data destination port specified by the first descriptor.

Herein, the acceleration module 201 establishes the MAC address table according to information such as a source MAC address and a source port in the received first Ethernet data from the ONU. When the MAC address table is queried, if a destination MAC address of the received first Ethernet data from the DDR 220 is matched with a MAC address of a certain record in the MAC address table, a corresponding port number is filled in the first descriptor as a destination port number of the first Ethernet data.

When no destination port is specified in the received first Ethernet data and first descriptor, the ONU 240 forwards the first Ethernet data and the first descriptor to the CPU 210, which configures a data destination port. After the CPU 210 writes the data destination port into the first descriptor, the acceleration module receives the first Ethernet data and the first descriptor, and writes a source MAC address and a source port corresponding to the first Ethernet data and the first descriptor into the MAC address table.

In a process of data transmission from the ONU 240 to the wireless network device 150: the ONU 240 converts photoelectrically converted data from optical signals into second Ethernet data, generates a second descriptor; modifies the second descriptor by querying a MAC address table in the acceleration module 201, and after processing the second Ethernet data, sends the second Ethernet data and the second descriptor to the acceleration module; the CPU 210 modifies the second descriptor by configuring a data destination port when the data destination port in the second descriptor in the ONU 240 is unknown; the acceleration module receives the second Ethernet data and the second descriptor from the ONU 240, and establishes a MAC address table according to the second Ethernet data and the second descriptor; receives the second Ethernet data and the second descriptor from the ONU 240, and writes the second Ethernet data and the second descriptor into the DDR 220; the wireless network device 150 reads the second Ethernet data and the second descriptor in the DDR 220, converts the second Ethernet data into second wireless data, and sends the second wireless data to the data destination port specified by the second descriptor.

Herein, the second Ethernet data and the second descriptor sent by the ONU 240 to the CPU 210 are sent to the acceleration module after the CPU 210 configures the data destination port. The acceleration module establishes or modifies the MAC address table according to the second Ethernet data and the second descriptor. The ONU 240 acquires the data destination port by querying the MAC address table, loads the data destination port into the second descriptor, and sends the second Ethernet data and the second descriptor to the DDR 220.

In an example of the present invention, the CPU further configures a packet processing rule into a packet processing rule table of the ONU. Herein, in the process of data transmission from the wireless network device to the ONU, the ONU further performs a packet processing on the first Ethernet data according to the packet processing rule in the packet processing rule table and in combination with the first descriptor. In the process of data transmission from the ONU to the wireless network device, the ONU further performs a packet processing on the second Ethernet data according to the packet processing rule in the packet processing rule table and in combination with the second descriptor.

A conversion between wireless data and Ethernet data in the wireless network device 150 is implemented by the data conversion module 151. The wireless network device is communicatively connected with the DDR through a Peripheral Component Interconnect Express (PCIE) bus.

The CPU includes a network protocol stack module 111 and an acceleration drive module 202. Herein, in the process of data transmission from the wireless network device to the ONU, the network protocol stack module 111 configures the packet processing rule into the packet processing rule table of the ONU, receives the first Ethernet data and first descriptor sent by the ONU, configures a data destination port to modify the first descriptor, and sends the first Ethernet data and the first descriptor to the ONU. In the process of data transmission from the ONU to the wireless network device, the network protocol stack module 111 configures the packet processing rule into the packet processing rule table of the ONU, receives the second Ethernet data and the second descriptor sent by the ONU, modifies the second descriptor by configuring a data destination port, and sends the second Ethernet data and the second descriptor to the ONU.

The CPU further includes an acceleration drive module 202 which configures a configuration acceleration module 201 to provide an initialization configuration for the acceleration module 201. Herein, configuration parameters of the initialization configuration include: a quantity of entries that may be recorded in the MAC address table, aging enable and aging time of the MAC address table, port-based record limit enable, a processing action when not finding a port number, speed limit control, etc.

The ONU includes a packet processing module 142 and a data exchange module 241. Herein, the packet processing module 142 receives data sent by the data exchange module or the CPU, sends data to the CPU or the data exchange module, determines whether to send the data to the CPU by querying the MAC address table in the acceleration module; and performs a packet modification on the data according to the packet processing rule in the packet rule processing table. Contents of the packet modification include: performing some packet modification processing on data packets according to the packet modification rule, or discarding some data packets due to a speed limit. The data exchange module 241 is communicatively connected with the packet processing module 142.

In an example of the present invention, as shown in FIG. 2, the acceleration module 201 is located within the data exchange module 241 in the ONU 240, a packet processing is performed on data in the packet processing module 142, and the data is exchanged between the DDR 220 and the acceleration module 201 in the data exchange module 241.

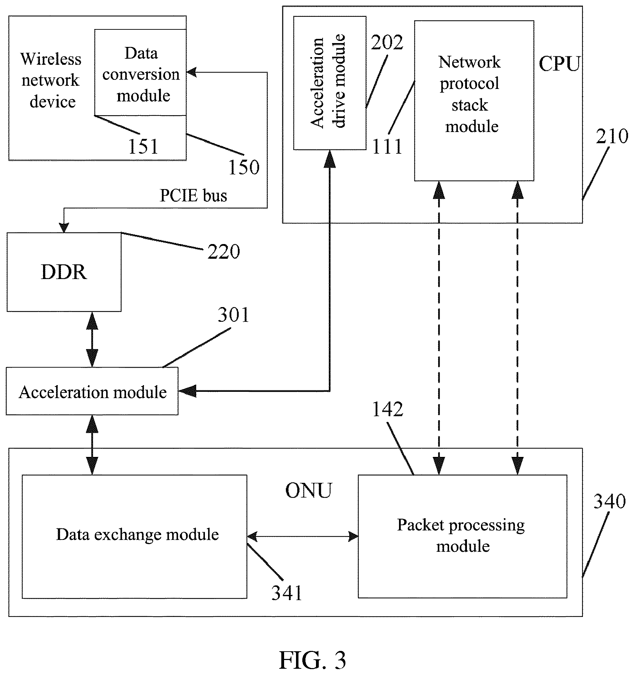

However, in a practical application, it is not limited to that. As shown in FIG. 3, an acceleration module 301 may be located outside an ONU 340 and communicatively connected to a data exchange module 341.

In addition, the acceleration module may be located outside the data exchange module and within the ONU, as long as the acceleration module may realize data exchange between the data exchange module and the DDR.

Herein, contents contained in the above descriptors include: a source port number, a destination port number, a known flag bit of a destination port, a Service Set Identifier (SSID) number, a Virtual Local Area Network (VLAN) number, a data type, a data processing action (hardware forwarding, processing or discarding by a CPU), speed limit information, queue information, a CPU queue number, required packet modification information, priority information, etc.

As shown in FIG. 2, the acceleration module 201 is communicatively connected to the DDR 220 via an AXI/AHB bus.

When reading data in the DDR, the acceleration module 201 directly reads data and a descriptor in the DDR via the AXI/AHB bus. When writing data and a descriptor into the DDR, the acceleration module 201 directly applies for a DDR memory space of the descriptor and the data to the DDR, and then writes the data and the descriptor into the DDR via the AXI/AHB bus.

According to the data exchange system provided by the present invention, after the CPU configures the data destination port, data exchange between the DDR and the ONU is implemented through the acceleration module, Ethernet data is processed through a hardware module. Therefore, a CPU occupancy rate of wireless services in the data exchange system is reduced, support of the ONU for other services other than the wireless services is improved, and competitiveness of the ONU is enhanced.

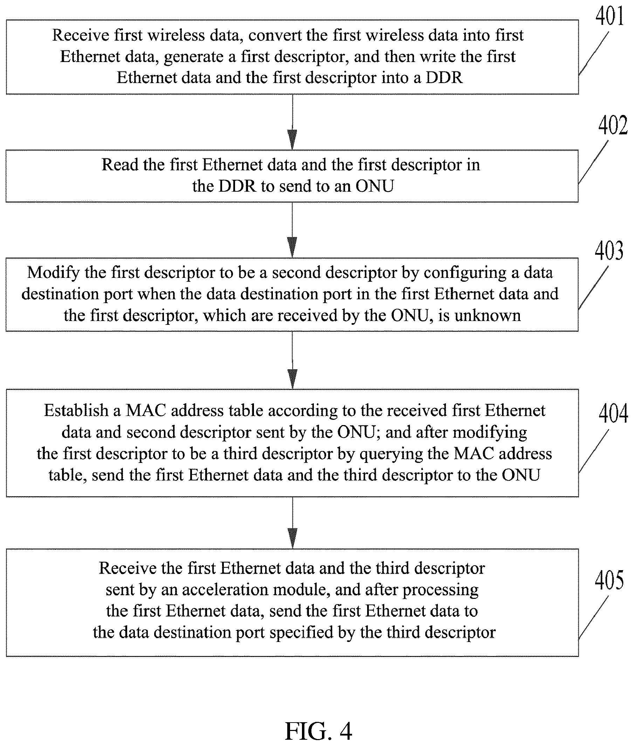

As shown in FIG. 4, the data exchange method provided in an example of the present invention is applied to the data exchange system of the above technical solution. A process of data transmission from a wireless network device to an ONU includes acts 401-405.

In act 401, first wireless data is received and converted into first Ethernet data, a first descriptor is generated, and then the first Ethernet data and the first descriptor are written into a Double Data Rate Synchronous Dynamic Random Access Memory (DDR).

In act 402, the first Ethernet data and the first descriptor in the DDR are read to send to an ONU.

In act 403, a data destination port is configured to modify the first descriptor to be a second descriptor when the data destination port in the first Ethernet data and the first descriptor, which are received by the ONU, is unknown.

In act 404, a MAC address table is established according to the received first Ethernet data and second descriptor sent by the ONU; and after the first descriptor is modified by querying the MAC address table and the first descriptor is modified to be a third descriptor, the first Ethernet data and the third descriptor are sent to the ONU.

In act 405, the first Ethernet data and third descriptor sent by an acceleration module are received, and after the first Ethernet data is processed, the first Ethernet data is sent to the data destination port specified by the third descriptor.

Herein, the MAC address table is established according to information such as a source MAC address and a source port in the received first Ethernet data from the ONU. When the MAC address table is queried, if a destination MAC address of the received first Ethernet data from the DDR is matched with a MAC address of a certain record in the MAC address table, a corresponding port number is filled in the first descriptor as a destination port number of the first Ethernet data.

When no destination port is specified in the received first Ethernet data and first descriptor, the ONU forwards the first Ethernet data and the first descriptor to the CPU, which configures a data destination port. After the CPU writes the data destination port into the first descriptor, an acceleration module receives the first Ethernet data and the first descriptor, and writes a source MAC address and a source port corresponding to the first Ethernet data and the first descriptor into the MAC address table.

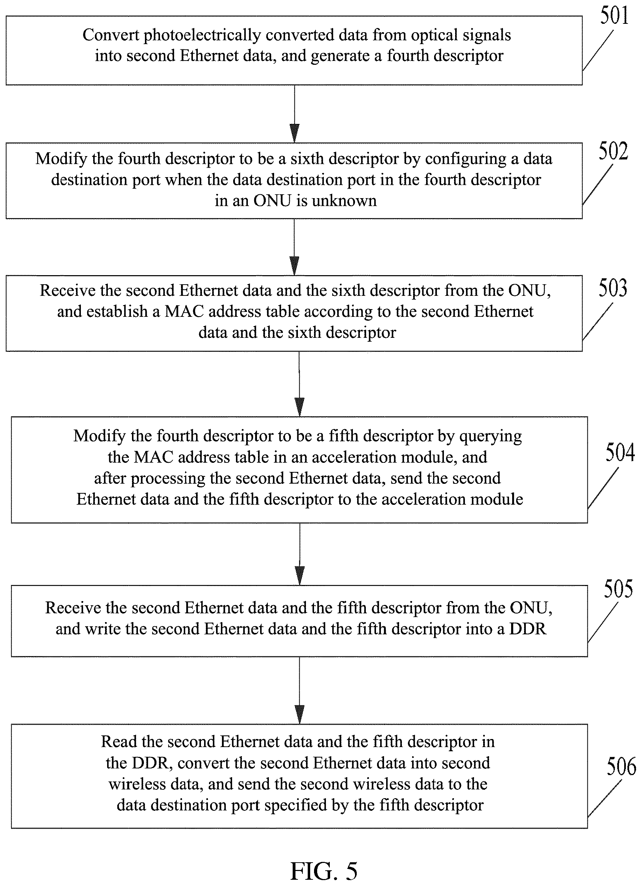

As shown in FIG. 5, a process of data transmission from an ONU to a wireless network device includes acts 501-506.

In act 501, photoelectrically converted data from optical signals is converted into second Ethernet data, and a fourth descriptor is generated.

In act 502, the fourth descriptor is modified by configuring a data destination port and the fourth descriptor is modified to be a sixth descriptor when the data destination port in the fourth descriptor in an ONU is unknown.

In act 503, the second Ethernet data and the sixth descriptor are received from the ONU, and a MAC address table is established according to the second Ethernet data and the sixth descriptor.

In act 504, the fourth descriptor is modified by querying the MAC address table in an acceleration module, the fourth descriptor is modified to be a fifth descriptor, and after the second Ethernet data is processed, the second Ethernet data and the fifth descriptor are sent to the acceleration module.

In act 505, the second Ethernet data and the fifth descriptor are received from the ONU, and the second Ethernet data and the fifth descriptor are written into a DDR.

In act 506, the second Ethernet data and the fifth descriptor in the DDR are read, the second Ethernet data is converted into second wireless data, and the second wireless data is sent to the data destination port specified by the fifth descriptor.

Herein, the second Ethernet data and the second descriptor sent by the ONU to the CPU are sent to the acceleration module after the CPU configures the data destination port. The acceleration module establishes or modifies the MAC address table according to the second Ethernet data and the second descriptor. The ONU acquires the data destination port by querying the MAC address table, loads the data destination port into the second descriptor, and sends the second Ethernet data and the second descriptor to the DDR.

In an example of the present invention, before the ONU performs a packet processing on data according to a packet processing rule table, the CPU configures a packet processing rule into the packet processing rule table of the ONU.

When processing the first Ethernet data, the ONU performs a packet processing on the first Ethernet data according to the packet processing rule in the packet processing rule table and in combination with the first descriptor. When processing the second Ethernet data, the ONU performs a packet processing on the second Ethernet data according to the packet processing rule in the packet processing rule table and in combination with the second descriptor.

In an example of the present invention, the first Ethernet data and the first descriptor in the DDR are read via an AXI/AHB bus; and the second Ethernet data and the second descriptor are written into the DDR via the AXI/AHB bus.

Specifically, when reading data in the DDR, the acceleration module directly reads data and a descriptor in the DDR via the AXI/AHB bus. When writing data and a descriptor into the DDR, the acceleration module directly applies for a DDR memory space of the descriptor and the data to the DDR, and then writes the data and the descriptor into the DDR via the AXI/AHB bus.

After the data is written into the DDR, the wireless network device reads the data in the DDR through a PCIE bus.

After the acceleration module is started, an initialization configuration is performed on the acceleration module through the acceleration drive module; and when the acceleration module works, configuration parameters of the acceleration module are adjusted through the acceleration drive module.

Herein, the initialization configuration and the adjusted configuration parameters include: a quantity of entries that may be recorded in the MAC address table, aging enable and aging time of the MAC address table, port-based record limit enable, a processing action when not finding a port number, speed limit control, etc.

According to the data exchange method provided by the present invention, after the CPU configures the data destination port, data exchange between the DDR and the ONU is implemented through the acceleration module, Ethernet data is processed through a hardware module. Therefore, a CPU occupancy rate of wireless services in a data exchange system is reduced, support of the ONU for other services other than the wireless services is improved, and competitiveness of the ONU is enhanced.

In a practical application, the CPU 210, the DDR, the acceleration module, the ONU, and the wireless network device 150 may all be implemented by a Central Processing Unit (CPU), a Micro Processing Unit (MPU), a Digital Signal Processor (DSP), or a Field Programmable Gate Array (FPGA) located in a data exchange system.

A computer readable storage medium according to an example of the present invention stores thereon a computer program which, when executed by a processor, performs following acts of a data exchange method.

In one example, when the computer program is executed by the processor, the computer program executes the following acts:
receiving first wireless data, converting the first wireless data into first Ethernet data, generating a first descriptor, and then writing the first Ethernet data and the first descriptor into a Double Data Rate Synchronous Dynamic Random Access Memory (DDR); reading the first Ethernet data and the first descriptor in the DDR to send to an ONU; configuring a data destination port to the first descriptor when the data destination port in the first Ethernet data and the first descriptor, which are received by the ONU, is unknown; establishing a MAC address table according to the received first Ethernet data and first descriptor sent by the ONU; modifying the first descriptor by querying the MAC address table, and sending the first Ethernet data and the first descriptor to the ONU; receiving the first Ethernet data and the first descriptor sent by an acceleration module, and after processing the first Ethernet data, sending the first Ethernet data to the data destination port specified by the first descriptor;
   and/or,
converting photoelectrically converted data from optical signals into second Ethernet data, generating a second descriptor; configuring a data destination port to the second descriptor when the data destination port in the second descriptor in the ONU is unknown; receiving the second Ethernet data and the second descriptor from the ONU, and establishing a MAC address table according to the second Ethernet data and the second descriptor; modifying the second descriptor by querying a MAC address table in the acceleration module, and after processing the second Ethernet data, sending the second Ethernet data and the second descriptor to the acceleration module; receiving the second Ethernet data and the second descriptor from the ONU, and writing the second Ethernet data and the second descriptor into the DDR; and reading the second Ethernet data and the second descriptor in the DDR, converting the second Ethernet data into second wireless data, and sending the second wireless data to the data destination port specified by the second descriptor.

In one example, when the computer program is executed by the processor, the computer program executes the following acts:
configuring a packet processing rule into a packet processing rule table of the ONU; performing a packet processing on the first Ethernet data according to the packet processing rule in the packet processing rule table and in combination with the first descriptor;
   and/or,
processing the second Ethernet data includes: performing a packet processing on the second Ethernet data according to the packet processing rule in the packet processing rule table and in combination with the second descriptor.

In one example, when the computer program is executed by the processor, the computer program executes the following acts:
reading the first Ethernet data and the first descriptor in the DDR, includes: reading the first Ethernet data and the first descriptor in the DDR via the AXI/AHB bus;
   and/or,
writing the second Ethernet data and the second descriptor into the DDR, includes: writing the second Ethernet data and the second descriptor into the DDR via the AXI/AHB bus.

In one example, when executed by the processor, the computer program executes: performing an initialization configuration on the acceleration module through an acceleration drive module after the acceleration module is started; and adjusting configuration parameters of the acceleration module through the acceleration drive module when the acceleration module works.

The skilled in the art should understand that, the examples of the present invention may be provided as a method, a system, or a computer program product. Therefore, a form of hardware example, a form of software example or a form of example combining software aspect and hardware aspect may be used in the present invention. Moreover, a form of computer program product executed on one or more computer available memory mediums (including but not limited to a disk memory and an optical memory and so on) which contain computer available program codes may be used in the present invention.

The present invention is described according to the flow charts and/or block diagrams of the method, device (system) and computer program product of the examples of the present invention. It should be understood that each flow and/or block in the flow charts and/or block diagrams and a combination of flow and/or block in the flow charts and/or block diagrams may be implemented by computer program instructions. These computer program instructions may be provided to a processor of a general-purpose computer, a special-purpose computer, an embedded processor or other programmable data processing devices to generate a machine, so that a device used for implementing functions specified in one or multiple flows of the flow charts and/or in one or multiple blocks of the block diagrams is generated through the instructions executed by the processor of the computer or other programmable data processing devices.

These computer program instructions also may be stored in a computer readable storage which may guide the computer or other programmable data processing devices to work in a specific way, so that the instructions stored in the computer readable storage generate manufactures including an instruction device, and the instruction device implements functions specified in one or multiple flows of the flow charts and/or in one or multiple blocks of the block diagrams.

These computer program instructions also may be loaded on the computer or other programmable data processing devices, so that a series of operation acts are executed on the computer or other programmable devices to generate processing implemented by the computer, thus, the instructions executed by the computer or other programmable devices provide the acts used for implementing functions specified in one or multiple flows of the flow charts and/or in one or multiple blocks of the block diagrams.

The examples described above are just alternative examples of the present invention and are not used for limiting the protection scope of the present invention.

### Industrial Applicability

By adopting the examples of the present invention, after the CPU configures a data destination port, data exchange between the DDR and the ONU is implemented through the acceleration module, and Ethernet data is processed through a hardware module. Therefore, a CPU occupancy rate of wireless services in the data exchange system is reduced, support of the ONU for other services other than the wireless services is improved, and competitiveness of the ONU is enhanced.

## Claims

1. A data exchange system for data exchange comprising
a Central Processing Unit (210), CPU, a Double Data Rate Synchronous Dynamic Random Access Memory (220), DDR, an acceleration module (201, 301), an Optical Network Unit (240, 340), ONU, and a wireless network device (150);
the wireless network device is configured to receive first wireless data, convert the first wireless data into first Ethernet data, generate a first descriptor, and then write the first Ethernet data and the first descriptor into the DDR;
the acceleration module is configured to:
read the first Ethernet data and the first descriptor in the DDR,
establish a Media Access Control, MAC, address table according to the first Ethernet data and first descriptor,
modify the first descriptor by querying the MAC address table, wherein when the MAC address table is queried, if a destination MAC address of the first Ethernet data is matched with a MAC address of a certain record in the MAC address table, a corresponding port number is filled in the first descriptor as a destination port number of a data destination port of the first Ethernet data, and
send the first Ethernet data and the first descriptor to the ONU;
the ONU is configured to receive the first Ethernet data and the first descriptor sent by the acceleration module, and after processing the first Ethernet data, send the first Ethernet data to the data destination port specified by the first descriptor;
**characterised in that** the acceleration module is located in the ONU, and the acceleration module is not located in the CPU; **and**
**in that,** when no destination port number is specified in the first Ethernet data and the first descriptor, the ONU is configured to forward the first Ethernet data and the first descriptor to the CPU, the CPU is configured to configure the data destination port, and after the CPU writes the data destination port into the first descriptor, the acceleration module is configured to receive the first Ethernet data and the first descriptor, and to write a source MAC address and a source port corresponding to the first Ethernet data and the first descriptor into the MAC address table.

2. The system according to claim 1, wherein the CPU further configures a packet processing rule into a packet processing rule table of the ONU;
the ONU is further configured to:
perform a packet processing on the first Ethernet data according to the packet processing rule in the packet processing rule table and in combination with the first descriptor.

3. The system according to claim 2, wherein, the acceleration module is configured to be communicatively connected with the DDR via an Advanced eXtensible Interface/Advanced High-performance Bus, AXI/AHB, bus.

4. The system according to claim 2 or 3, wherein the CPU comprises a network protocol stack module (111) and an acceleration drive module (202), wherein,
the acceleration drive module is configured to configure the acceleration module;
the network protocol stack module is configured to:
configure the packet processing rule into the packet processing rule table of the ONU, receive the first Ethernet data and the first descriptor sent by the ONU, configure the data destination port to the first descriptor, and send the first Ethernet data and the first descriptor to the ONU.

5. The system according to claim 4, wherein the ONU comprises a packet processing module (142) and a data exchange module (241, 341), wherein,
the packet processing module is configured to receive data sent by the data exchange module, determine whether to send the data to the CPU by querying the MAC address table in the acceleration module, and perform a packet modification on the data according to the packet processing rule in the packet rule processing table;
the data exchange module is communicatively connected with the packet processing module.

6. The system according to claim 5, wherein the acceleration module is located within the data exchange module; or, the acceleration module is located outside the data exchange module and is communicatively connected with the data exchange module.

7. A data exchange method for data exchange among a Central Processing Unit (210), CPU, a Double Data Rate Synchronous Dynamic Random Access Memory (220), DDR, an acceleration module (201, 301), an Optical Network Unit (240, 340), ONU, and a wireless network device (150); the method comprises:
receiving, by the wireless network device, first wireless data, converting the first wireless data into first Ethernet data, generating a first descriptor, and then writing the first Ethernet data and the first descriptor into a Double Data Rate Synchronous Dynamic Random Access Memory, DDR;
reading, by the acceleration module, the first Ethernet data and the first descriptor in the DDR;
establishing, by an acceleration module, a Media Access Control, MAC, address table according to the first Ethernet data and first descriptor;
modifying, by an acceleration module, the first descriptor by querying the MAC address table, wherein when the MAC address table is queried, if a destination MAC address of the first Ethernet data is matched with a MAC address of a certain record in the MAC address table, a corresponding port number is filled in the first descriptor as a destination port number of a data destination port of the first Ethernet data, and sending, by an acceleration module, the first Ethernet data and the first descriptor to the ONU; and
receiving, by the ONU, the first Ethernet data and the first descriptor sent by an acceleration module, and after processing the first Ethernet data, sending, by the ONU, the first Ethernet data to the data destination port specified by the first descriptor;
**characterised in that** the acceleration module is located in the ONU, and the acceleration module is not located in the CPU; **and**
**in that**, when no destination port number is specified in the first Ethernet data and the first descriptor, the ONU forwards the first Ethernet data and the first descriptor to the CPU, which configures the data destination port, and after the CPU writes the data destination port into the first descriptor, the acceleration module receives the first Ethernet data and the first descriptor, and writes a source MAC address and a source port corresponding to the first Ethernet data and the first descriptor into the MAC address table.

8. The method according to claim 7, wherein, the method further comprises: configuring, by the ONU, a packet processing rule into a packet processing rule table of the ONU;
the processing the first Ethernet data comprises: performing a packet processing on the first Ethernet data according to the packet processing rule in the packet processing rule table and in combination with the first descriptor.

9. The method according to claim 8, wherein the reading the first Ethernet data and the first descriptor in the DDR, comprises: reading the first Ethernet data and the first descriptor in the DDR via an Advanced extensible Interface/Advanced High-performance Bus, AXI/AHB, bus.

10. The method according to claim 8 or 9, wherein, the method further comprises:
performing an initialization configuration on the acceleration module through an acceleration drive module after the acceleration module is started; and adjusting configuration parameters of the acceleration module through the acceleration drive module when the acceleration module works.

11. A computer storage medium, storing computer executable instructions, which, when executed, implement the data exchange method according to any one of claims 7-10.

## Patentansprüche

1. Ein Datenaustauschsystem für den Datenaustausch, das eine Zentralverarbeitungseinheit (210), CPU (Central Processing Unit), einen synchronen dynamischen Direktzugriffsspeicher mit doppelter Datenrate (220), DDR (Double Data Rate), ein Beschleunigungsmodul (201, 301), eine optische Netzwerkeinheit (240, 340), ONU (Optical Network Unit), und ein drahtloses Netzwerkgerät (150) aufweist;
wobei das drahtlose Netzwerkgerät dazu eingerichtet ist, erste drahtlose Daten zu empfangen, die ersten drahtlosen Daten in erste Ethernet-Daten umzuwandeln, einen ersten Deskriptor zu erzeugen und dann die ersten Ethernet-Daten und den ersten Deskriptor in den DDR zu schreiben;
wobei das Beschleunigungsmodul dazu eingerichtet ist,
die ersten Ethernet-Daten und den ersten Deskriptor im DDR zu lesen,
eine MAC-Adresstabelle (Media Access Control) entsprechend den ersten Ethernet-Daten und dem ersten Deskriptor zu erstellen,
den ersten Deskriptor durch Abfragen der MAC-Adresstabelle zu modifizieren, wobei, wenn die MAC-Adresstabelle abgefragt wird, und wenn eine Ziel-MAC-Adresse der ersten Ethernet-Daten mit einer MAC-Adresse eines bestimmten Datensatzes in der MAC-Adresstabelle übereinstimmt, eine entsprechende Portnummer in den ersten Deskriptor als eine Zielportnummer eines Datenzielports der ersten Ethernet-Daten eingefügt wird, und
die ersten Ethernet-Daten und den ersten Deskriptors an die ONU zu senden;
wobei die ONU dazu eingerichtet ist, die ersten Ethernet-Daten und den ersten Deskriptor, die von dem Beschleunigungsmodul gesendet werden, zu empfangen und nach dem Verarbeiten der ersten Ethernet-Daten die ersten Ethernet-Daten an den durch den ersten Deskriptor spezifizierten Datenzielport zu senden;
**dadurch gekennzeichnet,**
**dass** sich das Beschleunigungsmodul in der ONU befindet und sich das Beschleunigungsmodul nicht in der CPU befindet; **und**
**dass**, wenn keine Zielportnummer in den ersten Ethernet-Daten und dem ersten Deskriptor spezifiziert ist, die ONU dazu eingerichtet ist, die ersten Ethernet-Daten und den ersten Deskriptor an die CPU weiterzuleiten, wobei die CPU dazu eingerichtet ist, den Datenzielport zu konfigurieren, und nachdem die CPU den Datenzielport in den ersten Deskriptor geschrieben hat, das Beschleunigungsmodul dazu eingerichtet ist, die ersten Ethernet-Daten und den ersten Deskriptor zu empfangen, und eine Quell-MAC-Adresse und einen Quell-Port entsprechend den ersten Ethernet-Daten und dem ersten Deskriptor in die MAC-Adresstabelle zu schreiben.

2. Das System nach Anspruch 1, wobei die CPU ferner eine Paketverarbeitungsregel in einer Paketverarbeitungsregeltabelle der ONU konfiguriert; wobei
die ONU ferner dazu eingerichtet ist,
eine Paketverarbeitung an den ersten Ethernet-Daten gemäß der Paketverarbeitungsregel in der Paketverarbeitungsregeltabelle und in Kombination mit dem ersten Deskriptor durchzuführen.

3. Das System nach Anspruch 2, wobei das Beschleunigungsmodul dazu eingerichtet ist, über einen Advanced eXtensible Interface/Advanced High-Performance-Bus, AXI/AHB, mit dem DDR kommunikativ verbunden zu sein.

4. Das System nach Anspruch 2 oder 3, wobei die CPU ein Netzwerkprotokollstackmodul (111) und ein Beschleunigungssteuerungsmodul (202) umfasst, wobei,
das Beschleunigungssteuerungsmodul dazu eingerichtet ist, das Beschleunigungsmodul zu konfigurieren; wobei
das Netzwerkprotokollstackmodul dazu eingerichtet ist,
die Paketverarbeitungsregel in der Paketverarbeitungsregeltabelle der ONU zu konfigurieren, die ersten Ethernet-Daten und den ersten Deskriptor, die von der ONU gesendet werden, zu empfangen, den Datenzielport auf den ersten Deskriptor zu konfigurieren, und die ersten Ethernet-Daten und den ersten Deskriptor an die ONU zu senden.

5. Das System nach Anspruch 4, wobei die ONU ein Paketverarbeitungsmodul (142) und ein Datenaustauschmodul (241, 341) umfasst, wobei,
das Paketverarbeitungsmodul dazu eingerichtet ist, von dem Datenaustauschmodul gesendete Daten zu empfangen, zu bestimmen, ob die Daten an die CPU zu senden sind, indem die MAC-Adresstabelle in dem Beschleunigungsmodul abgefragt wird, und eine Paketmodifikation an den Daten gemäß der Paketverarbeitungsregel in der Paketverarbeitungsregeltabelle durchzuführen; wobei
das Datenaustauschmodul kommunikativ mit dem Paketverarbeitungsmodul verbunden ist.

6. Das System nach Anspruch 5, wobei sich das Beschleunigungsmodul innerhalb des Datenaustauschmoduls befindet; oder wobei sich das Beschleunigungsmodul außerhalb des Datenaustauschmoduls befindet und kommunikativ mit dem Datenaustauschmodul verbunden ist.

7. Datenaustauschverfahren für den Datenaustausch zwischen einer Zentralverarbeitungseinheit (210), CPU (Central Processing Unit), einem synchronen dynamischen Direktzugriffsspeicher mit doppelter Datenrate (220), DDR (Double Data Rate), einem Beschleunigungsmodul (201, 301), einer optischen Netzwerkeinheit (240, 340), ONU (Optical Network Unit), und einem drahtlosen Netzwerkgerät (150); wobei
das Verfahren umfasst:
Empfangen von ersten drahtlosen Daten durch das drahtlose Netzwerkgerät, Umwandeln der ersten drahtlosen Daten in erste Ethernet-Daten, Erzeugen eines ersten Deskriptors und anschließendes Schreiben der ersten Ethernet-Daten und des ersten Deskriptors in einen synchronen dynamischen Direktzugriffsspeicher mit doppelter Datenrate, DDR (Double Data Rate);
Lesen der ersten Ethernet-Daten und des ersten Deskriptors im DDR durch das Beschleunigungsmodul;
Erstellen einer Media Access Control-, MAC-, Adresstabelle durch ein Beschleunigungsmodul entsprechend den ersten Ethernet-Daten und dem ersten Deskriptor;
Modifizieren, durch ein Beschleunigungsmodul, des ersten Deskriptors durch Abfragen der MAC-Adresstabelle, wobei, wenn die MAC-Adresstabelle abgefragt wird, und wenn eine Ziel-MAC-Adresse der ersten Ethernet-Daten mit einer MAC-Adresse eines bestimmten Datensatzes in der MAC-Adresstabelle übereinstimmt, eine entsprechende Portnummer in den ersten Deskriptor als eine Zielportnummer eines Datenzielports der ersten Ethernet-Daten eingefügt wird, und Senden der ersten Ethernet-Daten und des ersten Deskriptors durch ein Beschleunigungsmodul an die ONU; und
Empfangen der ersten Ethernet-Daten und des ersten Deskriptors, die von einem Beschleunigungsmodul gesendet wurden, durch die ONU, und nach dem Verarbeiten der ersten Ethernet-Daten, Senden der ersten Ethernet-Daten an den durch den ersten Deskriptor spezifizierten Datenzielport durch die ONU;
**dadurch gekennzeichnet,**
**dass** sich das Beschleunigungsmodul in der ONU befindet und das Beschleunigungsmodul sich nicht in der CPU befindet; **und**
**dass**, wenn keine Zielportnummer in den ersten Ethernet-Daten und dem ersten Deskriptor angegeben ist, die ONU die ersten Ethernet-Daten und den ersten Deskriptor an die CPU weiterleitet, die den Datenzielport konfiguriert, und nachdem die CPU den Datenzielport in den ersten Deskriptor schreibt, das Beschleunigungsmodul die ersten Ethernet-Daten und den ersten Deskriptor empfängt, und eine Quell-MAC-Adresse und einen Quell-Port entsprechend den ersten Ethernet-Daten und dem ersten Deskriptor in die MAC-Adresstabelle schreibt.

8. Das Verfahren nach Anspruch 7, wobei das Verfahren ferner umfasst: Konfigurieren einer Paketverarbeitungsregel durch die ONU in einer Paketverarbeitungsregeltabelle der ONU; wobei
die Verarbeitung der ersten Ethernet-Daten umfasst: Durchführen einer Paketverarbeitung der ersten Ethernet-Daten gemäß der Paketverarbeitungsregel in der Paketverarbeitungsregeltabelle und in Kombination mit dem ersten Deskriptor.

9. Das Verfahren nach Anspruch 8, wobei das Lesen der ersten Ethernet-Daten und des ersten Deskriptors im DDR umfasst: Lesen der ersten Ethernet-Daten und des ersten Deskriptors im DDR über einen Advanced eXtensible Interface/Advanced High-Performance-Bus, AXI/AHB.

10. Das Verfahren nach Anspruch 8 oder 9, wobei das Verfahren weiterhin umfasst:
Durchführen einer Initialisierungskonfiguration auf dem Beschleunigungsmodul durch ein Beschleunigungssteuerungsmodul, nachdem das Beschleunigungsmodul gestartet ist; und Einstellen von Konfigurationsparametern des Beschleunigungsmoduls durch das Beschleunigungssteuerungsmodul, wenn das Beschleunigungsmodul arbeitet.

11. Ein Computerspeichermedium, das computerausführbare Befehle speichert, die, wenn sie ausgeführt werden, das Datenaustauschverfahren nach einem der Ansprüche 7-10 implementieren.

## Revendications

1. Dispositif d'échange de données destiné à assurer l'échange de données comprenant une unité centrale de traitement (210), CPU, une mémoire à accès aléatoire dynamique synchrone à double débit (220), DDR, un module d'accélération (201, 301), une unité de réseau optique (240, 340), ONU et un dispositif de réseau sans fil (150) ;
le dispositif de réseau sans fil est configuré de manière à recevoir des premières données sans fil, convertir les premières données sans fil en premières données Ethernet, produire un premier descripteur et ensuite écrire les premières données Ethernet et le premier descripteur dans la mémoire DDR ;
le module d'accélération est configuré de manière à :
lire les premières données Ethernet et le premier descripteur dans la mémoire DDR,
établir une table d'adresse de commande d'accès de support, MAC, en fonction des premières données Ethernet et du premier descripteur,
modifier le premier descripteur par interrogation de la table d'adresse MAC, dans lequel, lorsque la table d'adresse MAC est interrogée, si une adresse MAC de destination des premières données Ethernet est associée à une adresse MAC d'un certain enregistrement dans la table d'adresse MAC, un numéro de port correspondant est renseigné dans le premier descripteur en tant que numéro de port de destination d'un port de destination de données des premières données Ethernet, et
envoyer les premières données Ethernet et le premier descripteur à l'unité ONU ;
l'unité ONU étant configurée de manière à recevoir les premières données Ethernet et le premier descripteur envoyé par le module d'accélération, et après traitement des premières données Ethernet, envoyer les premières données Ethernet au port de destination de données spécifié par le premier descripteur ;
**caractérisé en ce que** le module d'accélération est situé dans l'unité ONU et le module d'accélération n'est pas situé dans l'unité CPU ; et
**en ce que**, lorsqu'aucun numéro de port de destination n'est spécifié dans les premières données Ethernet et le premier descripteur, l'unité ONU est configurée de manière à transmettre les premières données Ethernet et le premier descripteur à l'unité CPU, l'unité CPU est configurée de manière à configurer le port de destination de données, et ensuite, l'unité CPU écrit le port de destination de données dans le premier descripteur, le module d'accélération est configuré de manière à recevoir les premières données Ethernet et le premier descripteur, et à écrire une adresse MAC de source et un port de source correspondant aux premières données Ethernet et au premier descripteur dans la table d'adresse MAC.

2. Dispositif selon la revendication 1, dans lequel l'unité CPU configure, en outre, une règle de traitement de paquet dans une table de règle de traitement de paquet de l'unité ONU ;
l'unité ONU est, en outre, configurée de manière à :
exécuter un traitement de paquet sur les premières données Ethernet en fonction de la règle de traitement de paquet dans la table de règle de traitement de paquet et en association avec le premier descripteur.

3. Dispositif selon la revendication 2, dans lequel, le module d'accélération est configuré de manière à être couplé afin de pouvoir communiquer à la mémoire DDR par l'intermédiaire d'un bus à interface extensible évoluée/bus hautes performances évolué, AXI/AHB.

4. Dispositif selon la revendication 2 ou 3, dans lequel l'unité CPU comprend un module de pile de protocole de réseau (111) et un module de commande d'accélération (202), dans lequel,
le module de commande d'accélération est configuré de manière à configurer le module d'accélération ;
le module de pile de protocole de réseau est configuré de manière à :
configurer la règle de traitement de paquet dans la table de règle de traitement de paquet de l'unité ONU, recevoir les premières données Ethernet et le premier descripteur envoyés par l'unité ONU, configurer le port de destination de données sur le premier descripteur, et envoyer les premières données Ethernet et le premier descripteur à l'unité ONU.

5. Dispositif selon la revendication 4, dans lequel l'unité ONU comprend un module de traitement de paquet (142) et un module d'échange de données (241, 341), dans lequel,
le module de traitement de paquet est configuré de manière à recevoir des données envoyées par le module d'échange de données, déterminer s'il faut envoyer les données à l'unité CPU en interrogeant la table d'adresse MAC dans le module d'accélération, et exécuter une modification de paquet sur les données en fonction de la règle de traitement de paquet dans la table de règle de traitement de paquet ;
le module d'échange de données est couplé afin de pouvoir communiquer avec le module de traitement de paquet.

6. Dispositif selon la revendication 5, dans lequel le module d'accélération est situé à l'intérieur du module d'échange de données ; ou, le module d'accélération est situé à l'extérieur du module d'échange de données et est couplé afin de pouvoir communiquer avec le module d'échange de données.

7. Procédé d'échange de données destiné à assurer un échange de données parmi une unité centrale de traitement (210), CPU, une mémoire à accès aléatoire dynamique synchrone à double débit, DDR, (220), un module d'accélération (201, 301), une unité optique de réseau, ONU, (240, 340) et un dispositif de réseau sans fil (150) ;
le procédé comprend :
la réception, par le dispositif de réseau sans fil, de premières données sans fil, la conversion des premières données sans fil en premières données Ethernet, la production d'un premier descripteur, et ensuite l'écriture des premières données Ethernet et du premier descripteur dans une mémoire à accès aléatoire dynamique synchrone à double débit, DDR ;
la lecture, par le module d'accélération, des premières données Ethernet et du premier descripteur dans la mémoire DDR ;
l'établissement, par un module d'accélération, d'une table d'adresse de commande d'accès de support, MAC, en fonction des premières données Ethernet et du premier descripteur ;
la modification, par un module d'accélération, du premier descripteur en interrogeant la table d'adresse MAC, dans lequel lorsque la table d'adresse MAC est interrogée, si une adresse MAC de destination des premières données Ethernet est associée à une adresse MAC d'un certain enregistrement dans la table d'adresse MAC, un numéro de port correspondant est renseigné dans le premier descripteur en tant que numéro de port de destination d'un port de destination de données des premières données Ethernet, et l'envoi, par un module d'accélération, des premières données Ethernet et du premier descripteur à l'unité ONU ; et
la réception, par l'unité ONU, des premières données Ethernet et du premier descripteur envoyé par un module d'accélération, et après traitement des premières données Ethernet, l'envoi, par l'unité ONU, des premières données Ethernet au port de destination de données spécifié par le premier descripteur ;
**caractérisé en ce que** le module d'accélération est situé dans l'unité ONU, et le module d'accélération n'est pas situé dans l'unité CPU ; et
**en ce que**, lorsqu'aucun numéro de port de destination n'est spécifié dans les premières données Ethernet et le premier descripteur, l'unité ONU transmet les premières données Ethernet et le premier descripteur à l'unité CPU qui configure le port de destination de données, et ensuite l'unité CPU écrit le port de destination de données dans le premier descripteur, le module d'accélération reçoit les premières données Ethernet et le premier descripteur, et écrit une adresse MAC de source et un port de source correspondant aux premières données Ethernet et au premier descripteur dans la table d'adresse MAC.

8. Procédé selon la revendication 7, dans lequel, le procédé comprend, en outre : la configuration, par l'unité ONU, d'une règle de traitement de paquet dans une table de règle de traitement de paquet de l'unité ONU ;
le traitement des premières données Ethernet comprend : l'exécution d'un traitement de paquet sur les premières données Ethernet en fonction de la règle de traitement de paquet dans la table de règle de traitement de paquet et en association avec le premier descripteur.

9. Procédé selon la revendication 8, dans lequel la lecture des premières données Ethernet et du premier descripteur dans la mémoire DDR, comprend : la lecture des premières données Ethernet et du premier descripteur dans la mémoire DDR par l'intermédiaire d'un bus à interface extensible évoluée/bus hautes performances évolué, AXI/AHB.

10. Procédé selon la revendication 8 ou 9, dans lequel, le procédé comprend, en outre :
l'exécution d'une initialisation de configuration sur le module d'accélération par un module de commande d'accélération après le démarrage du module d'accélération ; et l'ajustement des paramètres de configuration du module d'accélération par le module de commande d'accélération lorsque le module d'accélération fonctionne.

11. Support de mémorisation d'ordinateur, mémorisant des instructions exécutables par ordinateur, qui, lorsqu'elle sont exécutées, mettent en œuvre le procédé d'échange de données selon l'une quelconque des revendications 7 à 10.
